# FASCICULE DE BREVET EUROPEEN

(11) **EP 3 629 185 B1**
(45) Date de publication et mention de la délivrance du brevet: **26.06.2024**
(21) Numéro de dépôt: 19196986.4
(22) Date de dépôt: 12.09.2019
(51) Int. Cl.: G06F 12/126, G06F 12/0875, G06F 9/48, G06F 12/0855, G06F 13/16, G06F 12/128

(54) **PROCÉDÉ DE GESTION DE LA FOURNITURE D'INFORMATIONS, EN PARTICULIER DES INSTRUCTIONS, À UN MICROPROCESSEUR ET SYSTÈME CORRESPONDANT**
STEUERUNGSVERFAHREN DER INFORMATIONSLIEFERUNG, INSBESONDERE VON ANWEISUNGEN, AN EINEN MIKROPROZESSOR, UND ENTSPRECHENDES SYSTEM
METHOD FOR MANAGING THE SUPPLY OF INFORMATION, IN PARTICULAR OF INSTRUCTIONS, WITH A MICROPROCESSOR AND CORRESPONDING SYSTEM

(30) Priorité: 26.09.2018 FR 1858771
(43) Date de publication de la demande: 01.04.2020
(73) Titulaire: STMicroelectronics (Grenoble 2) SAS, 38000 Grenoble (FR); STMicroelectronics (Rousset) SAS, 13790 Rousset (FR)
(72) Inventeur: METZGER, Sébastien, 13100 Aix en Provence (FR); BRINI, Silvia, 38120 Fontanil (FR)
(74) Mandataire: Casalonga

(56) Documents cités:
- WO-A2-01/50269
- US-A1- 2010 211 742
- US-A1- 2011 225 369

## Description

Des modes de mise en oeuvre et de réalisation de l'invention concernent les processeurs, et notamment la gestion de la fourniture d'informations, par exemple des instructions, à ces processeurs en particulier lorsqu'une partie du logiciel à exécuter par le processeur se situe dans une mémoire externe et que cette partie de logiciel est amenée à être stockée dans une mémoire cache de façon à optimiser le temps d'exécution du code.

Le document US 2010/211 742 A1 a trait à l'ordre de délivrance à un microprocesseur, depuis une mémoire cache, de mots critiques et non critiques qui sont entrelacés.

Il existe un besoin de ne pas pénaliser le temps d'exécution d'un groupe d'instructions, par exemple un programme d'interruption, situé dans une autre mémoire, par exemple une mémoire flash interne, alors qu'une ligne d'instructions contenant une instruction précédente requise par le processeur et stockée dans la mémoire externe, est en cours de chargement en vue de son stockage dans une mémoire cache.

Des aspects et modes de mise en oeuvre et de réalisation de l'invention sont définis dans les revendications annexées.

Selon un aspect, il est proposé un procédé de gestion de la fourniture d'informations à un processeur.

Le terme « information » s'entend dans un sens très large incluant par exemple des instructions, mais également éventuellement des données nécessaires à ces instructions telles que des notations (« littéral » en langue anglaise) représentant une valeur fixe dans un code source.

Le processeur coopère avec un ensemble de mémoires comportant au moins
une mémoire cache,
une première mémoire, par exemple une mémoire externe, stockant au moins une première information, par exemple une instruction, au sein d'un premier groupe d'informations, et
une deuxième mémoire, par exemple une mémoire interne telle qu'une mémoire flash, stockant au moins une deuxième information, par exemple une ou plusieurs instructions d'un programme d'interruption, au sein d'un deuxième groupe d'informations.

Un groupe d'informations peut comprendre plusieurs bits organisés typiquement en plusieurs mots, par exemple 4 mots de 64 bits.

En fonction de la technologie utilisée pour la mémoire stockant ce groupe d'informations, celui-ci peut occuper par exemple une portion de ligne ou une ligne complète ou plusieurs lignes de cette mémoire.

Le procédé comprend,
- après un premier défaut de cache consécutif à une première requête de ladite première information émanant du processeur, une première fourniture au processeur de la première information issue de la première mémoire, puis,
- après une deuxième requête de ladite deuxième information émanant du processeur et un deuxième défaut de cache consécutif à la dite deuxième requête, une deuxième fourniture au processeur de la deuxième information issue de la deuxième mémoire, même si le premier groupe d'informations est en cours de transfert depuis la première mémoire en vue de son chargement dans la mémoire cache.

Ainsi, même si ce transfert de ce premier groupe d'informations prend plusieurs centaines de cycles du signal d'horloge cadençant le processeur, le programme d'interruption peut être effectué en temps réel.

Le chargement dans une mémoire cache s'effectue typiquement dans un emplacement de cette mémoire cache communément désigné par l'homme du métier sous la dénomination « ligne de cache ». Cette ligne de cache comporte un ensemble d'emplacements mémoire destinés à stocker un groupe de bits et représente l'élément indivisible auquel on va accéder pour déterminer si l'on a ou non un défaut de cache (« miss » en langue anglaise) ou pour y stocker un nouveau groupe de bits émanant d'une autre mémoire à la suite d'un défaut de cache.

En fonction de la technologie utilisée et de la taille de ligne de cache, une mémoire cache peut comporter une seule mémoire vive ou plusieurs mémoires vives accessibles en parallèle et la ligne de cache peut se situer au sein d'une portion de ligne ou d'une ligne ou de plusieurs lignes de la mémoire vive unique ou au sein de plusieurs lignes dans plusieurs mémoires vives.

Le deuxième groupe d'informations dans lequel se situe la deuxième information, peut être ou non destiné à être stocké dans la mémoire cache, c'est-à-dire qu'il peut être « cachable » ou « non cachable ».

Si la deuxième information est destinée à être stockée dans la mémoire cache (c'est-à-dire si elle est « cachable »), alors le procédé comprend en outre un deuxième défaut de cache consécutif à la deuxième requête. En d'autres termes, la fourniture de la deuxième information issue de la deuxième mémoire fait suite à un défaut de cache.

Selon un mode de mise en oeuvre, on peut prévoir un contrôleur de cache couplé entre le processeur et l'ensemble de mémoires, et la première fourniture de la première information et la deuxième fourniture de la deuxième information peuvent être alors respectivement effectuées sur deux bus distincts reliant respectivement la première mémoire et la deuxième mémoire au contrôleur de cache et sur un troisième bus reliant le contrôleur de cache et le processeur.

Selon un mode de mise en oeuvre, si le deuxième groupe d'informations est prêt à être chargé dans une ligne de cache de la mémoire cache avant que le premier groupe d'informations soit prêt à être chargé dans cette même ligne de cache (alors que le processeur a d'abord fait la requête de la première information puis la requête de la deuxième information) on interdit alors le chargement du premier groupe d'informations dans ladite ligne de cache.

En d'autres termes, si le premier groupe d'informations et le deuxième groupe d'informations sont destinés à être stockés dans une même ligne de cache, on va interdire le chargement du premier groupe d'informations dans cette ligne de cache si le deuxième groupe d'informations qui a fait l'objet d'une requête postérieure, est prêt à être stocké dans la ligne de cache avant que le premier groupe d'informations ne soit prêt à y être stocké.

En effet dans le cas d'une politique de remplacement déterministe prévoyant par exemple que les informations émanant de la deuxième mémoire sont prioritaires, il est souhaitable de respecter cette priorité afin de ne pas casser le déterminisme du procédé.

Aussi ce mode de mise en oeuvre évite d'écraser dans la ligne de cache, des informations prioritaires par des informations qui sont moins prioritaires.

Comme indiqué ci-avant, la première information peut comporter au moins une instruction à exécuter par le processeur.

Par ailleurs, la deuxième information peut comporter au moins une instruction d'un programme d'interruption.

Selon un autre aspect, il est proposé un système, comprenant
un processeur,
un ensemble de mémoire configuré pour coopérer avec le processeur et comportant au moins une mémoire cache, une première mémoire configurée pour stocker au moins une première information au sein d'un premier groupe d'informations et une deuxième mémoire configurée pour stocker au moins une deuxième information au sein d'un deuxième groupe d'informations, et
des moyens de contrôle configurés pour :
   - après une première requête de ladite première information émanant du processeur, effectuer une première fourniture au processeur de la première information issue de la première mémoire, puis
   - après une deuxième requête de ladite deuxième information émanant du processeur, effectuer une deuxième fourniture au processeur de la deuxième information issue de la deuxième mémoire, même si le premier groupe d'informations est en cours de transfert depuis la première mémoire en vue de son chargement dans la mémoire cache, typiquement dans une ligne de cache de cette mémoire cache.

Selon un mode de réalisation, dans le cas où la deuxième information est « cachable », les moyens de contrôle sont configurés pour effectuer ladite deuxième fourniture après un deuxième défaut de cache consécutif à ladite deuxième requête.

Selon un mode réalisation, les moyens de contrôle comprennent
- un contrôleur de cache couplé entre le processeur et l'ensemble de mémoires, et possédant au moins une première interface, une deuxième interface et une troisième interface,
- un premier bus couplé entre la première interface et la première mémoire,
- un deuxième bus couplé entre la deuxième interface et la deuxième mémoire,
- un troisième bus couplé entre la troisième interface et le processeur,

Le contrôleur de cache est avantageusement configuré pour fournir la première information délivrée par la première mémoire sur le premier bus, au processeur via la troisième interface et le troisième bus, et pour fournir la deuxième information délivrée par la deuxième mémoire sur le deuxième bus, au processeur via la troisième interface et le troisième bus.

Selon un mode de réalisation, les moyens de contrôle sont configurés pour, si le deuxième groupe d'informations est prêt à être chargé dans une ligne de cache de la mémoire cache avant que le premier groupe d'informations soit prêt à être chargé dans cette même ligne de cache, interdire le chargement du premier groupe.

Plus précisément, dans ce cas, selon un mode de réalisation, la première interface comporte une mémoire tampon configurée pour stocker le premier groupe d'informations extrait de la première mémoire et le contrôleur de cache est configuré pour faire avorter le processus de stockage du premier groupe d'informations.

Comme indiqué ci-avant, la première information peut comporter au moins une instruction à exécuter par le processeur tandis que la deuxième information peut comporter au moins une instruction d'un programme d'interruption.

Le système peut comprendre un microcontrôleur incorporant le processeur, la mémoire cache, la deuxième mémoire et le contrôleur de cache, la première mémoire étant une mémoire externe au microcontrôleur.

D'autres avantages et caractéristiques de l'invention apparaîtront à l'examen de la description détaillée de modes de mise en oeuvre et de réalisation, nullement limitatifs, et des dessins annexés sur lesquels :

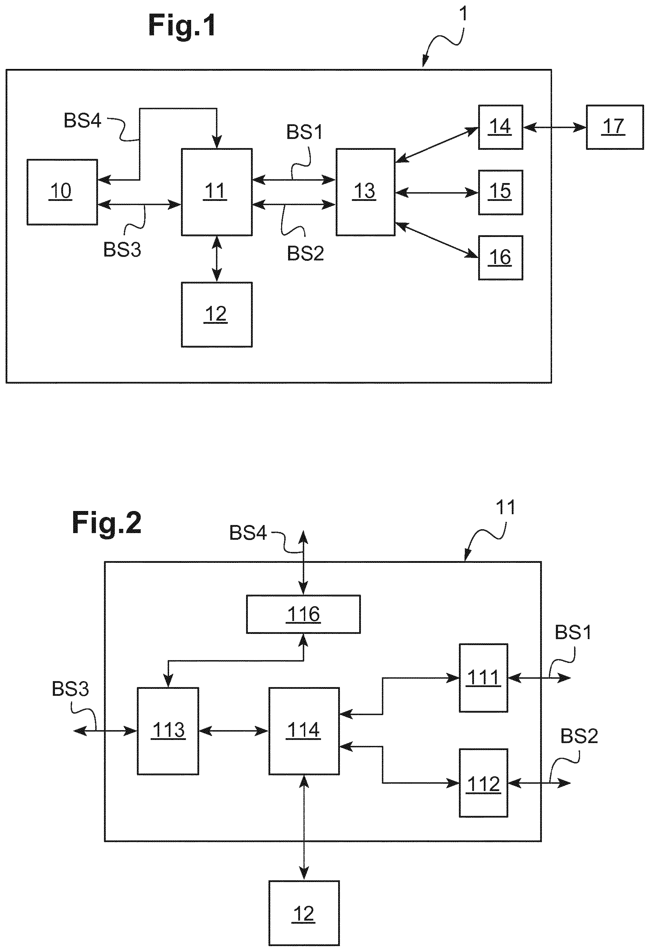

- les figures 1 à 5 illustrent schématiquement des modes de réalisation et de mise en oeuvre de l'invention.

Sur la figure 1, la référence 1 désigne un système, en particulier un microcontrôleur, par exemple celui commercialisé par la société STMicroelectronics sous la référence STM32.

Ce microcontrôleur comporte une unité centrale de calcul ou processeur 10, ainsi qu'un ensemble de mémoires comportant ici une mémoire 17, externe au microcontrôleur, une mémoire interne 16, par exemple une mémoire flash, et une autre mémoire interne 15, par exemple une mémoire vive (mémoire RAM).

La mémoire externe 17 est couplée à un contrôleur de mémoire 14 de structure classique.

Le microcontrôleur 1 comporte par ailleurs une mémoire cache 12, de structure classique, par exemple une mémoire 2-associative (2-ways-associative) couplée à un contrôleur de cache 11.

Le contrôleur de cache 11 est couplé au contrôleur de mémoire 14 à la mémoire 15 et à la mémoire 16 par un circuit d'interconnexion 13 comportant des ports d'entrée et des ports de sortie.

La structure d'un tel circuit d'interconnexion, qui est en général un circuit d'interconnexion multicouches, ainsi que le protocole permettant l'échange et le routage des transactions à l'intérieur du circuit d'interconnexion sont bien connus de l'homme du métier.

Celui-ci pourra par exemple se référer notamment :
à l'article de Venkateswara Rao et autres intitulé « A Frame work on AMBA bus based Communication Architecture to improve the Real Time Computing Performance in MPSoC », International Journal of Computer Applications (0975-8887), Volume 91 - N° 5, Avril 2014,
   ou
à une présentation générale de ces circuits d'interconnexion effectuée en 2015 par A. Gerstlauer et disponible à l'adresse internet http://users.ece.utexas.edu/~gerstl/ee382v_f14/lectures/lecture_12.pdf.

Par ailleurs, à titre indicatif mais non limitatif, on peut utiliser par exemple le circuit d'interconnexion commercialisé par la société ARM sous la référence NIC-400 (version R0p3 ).

Le circuit d'interconnexion 13 est connecté au contrôleur de cache 11 par deux bus BS1 et BS2.

Le contrôleur de cache est relié par ailleurs au microprocesseur par un troisième bus BS3 ainsi que par un quatrième bus BS4 qui, comme on le verra plus en détail, permettra une configuration des registres du contrôleur de cache.

Les différents bus peuvent être de toute structure classique, et par exemple des bus AHB utilisant un protocole décrit par exemple dans le document AMBA 3 AHB-Lite Protocol V1.0 Spécification, de la société ARM (2001, 2006).

Le contrôleur de cache 11, couplé entre le processeur 10 et l'ensemble de mémoires 15, 16 et 17, le premier bus BS1, le deuxième bus BS2, le troisième bus BS3 forment ici des moyens de contrôle configurés pour
- après une première requête d'une première information, par exemple une première instruction, émanant du processeur 10, effectuer une première fourniture au processeur 10 de la première instruction issue de la première mémoire 17, puis,
- après une deuxième requête d'une deuxième instruction émanant du processeur 10, effectuer une deuxième fourniture au processeur 10 de cette deuxième instruction issue de la deuxième mémoire 16 même si le groupe d'instructions dans lequel figure la première instruction est en cours de transfert depuis la première mémoire 17 en vue de son chargement dans une ligne de cache de la mémoire cache 12.

On reviendra plus en détail ci-après sur un exemple de mise en oeuvre d'un tel procédé.

Si l'on se réfère maintenant plus particulièrement à la figure 2, on voit que le contrôleur de cache 11 comporte dans cet exemple de réalisation une première interface 111 couplée au premier bus BS1, une deuxième interface 112 couplée au deuxième bus BS2 et une troisième interface 113 couplée au troisième bus BS3.

Le contrôleur de cache comporte également une interface de registre 116 couplée au bus BS4.

La troisième interface 113 comporte une machine d'état destinée à gérer le dialogue avec le bus relié au processeur 10.

Cette interface 113 reçoit les requêtes en provenance du processeur comportant les adresses des informations (instructions) requises en mémoire, et fournit les instructions au processeur lorsqu'elles sont disponibles.

La première interface 111 est configurée pour recevoir les requêtes d'instructions émanant du processeur 10 à destination de la mémoire externe 17 et pour fournir les instructions correspondantes au processeur 10.

En outre, lorsqu'une instruction fait partie d'un groupe d'instructions au sein de la première mémoire, la première interface 111 comporte une mémoire tampon configurée pour stocker ce groupe d'instructions extrait de la mémoire 17 puis, lorsque le stockage est terminé, envoyer une indication à un circuit de contrôle de cache 114 qui commande l'écriture et la lecture dans la mémoire cache 12.

La deuxième interface 112 présente une structure équivalente à celle de la première interface 111 et est configurée pour cette fois-ci recevoir les requêtes d'instructions émanant du processeur 10 à destination de la mémoire interne 16 et pour renvoyer les instructions au processeur 10.

Les deux interfaces 111 et 112 comportent également des machines d'état.

Comme indiqué ci-avant l'interface 116 permet de configurer les registres du contrôleur de cache en réponse à une indication de configuration émanant du processeur, et permet notamment de désigner en fonction de l'adresse associée à une requête du processeur, dans quelle mémoire l'information ou l'instruction correspondante est stockée.

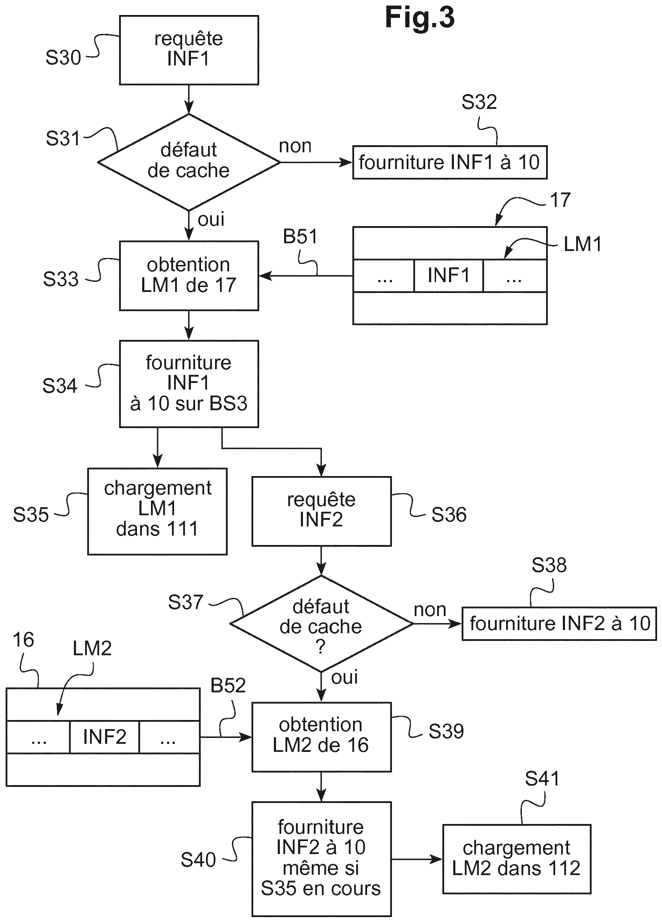

On se réfère maintenant plus particulièrement aux figures 3 à 5 pour décrire un exemple de mise en oeuvre du procédé selon l'invention.

Sur la figure 3, on suppose dans l'étape S30 que le processeur 10 émet sur le bus BS3 une requête d'une instruction INF1 qui est présente au sein d'un groupe d'instructions LM1 que l'on suppose dans cet exemple, occuper une ligne de la mémoire externe 17.

Le contrôleur de cache vérifie tout d'abord dans l'étape S31 si cette instructions INF1 est déjà stockée dans une ligne de cache de la mémoire cache 12.

Si l'on n'a pas de défaut de cache, c'est-à-dire si cette instruction INF1 est déjà stockée dans la ligne de cache de la mémoire cache, alors le contrôleur de cache fournit l'instruction INF1 au processeur 10 (étape S32).

Dans le cas où l'on a un défaut de cache c'est-à-dire si l'instruction INF1 n'est pas stockée dans une ligne de cache de la mémoire cache, alors le contrôleur de cache envoie une requête à la première interface 111 de façon que le groupe d'instructions LM1 occupant la ligne de la mémoire 17 et contenant l'instruction INF1, soit transmise sur le bus BS1 à cette première interface 111, l'instruction INF1 étant transmise en premier (étape S33).

Puis, dans l'étape S34, le contrôleur de cache fournit l'instruction INF1 au processeur 10 sur le bus BS3.

Parallèlement, l'ensemble du groupe d'instructions LM1 est chargé dans une mémoire tampon de la première interface 111 (étape S35).

On suppose également que postérieurement à la requête de l'instruction INF1, le processeur émet dans l'étape S36 une deuxième requête d'une deuxième instruction INF2 qui est cette fois-ci stockée au sein d'un deuxième groupe d'instructions LM2 que l'on suppose dans cet exemple, occuper une ligne LM2 dans la mémoire interne 16.

Dans cet exemple, on suppose que cette partie de mémoire contenant le groupe LM2 est « cachable » c'est-à-dire destinée à être également stockée dans la mémoire cache.

Le contrôleur de cache vérifie donc dans l'étape S37 si l'on est en présence d'un défaut de cache.

En l'absence de défaut de cache, c'est-à-dire si l'instruction INF2 est déjà présente dans la mémoire cache, le contrôleur de cache fournit l'instruction INF2 au processeur 10 (étape S38).

Par contre, en présence d'un défaut de cache, la deuxième interface 112 va lire la mémoire interne 16 de façon à obtenir sur le bus BS2 le groupe d'instructions LM2 contenant l'instruction INF2 (étape S39).

Là encore, l'instruction INF2 est fournie en premier à l'interface 112.

Et, le contrôleur de cache fournit cette instruction INF2 dans l'étape S40 au processeur 10, et ce même si le chargement du groupe d'informations LM1 est toujours en cours dans la mémoire tampon de la première interface 111 (étape S35).

De ce fait, si cette instruction INF2 déclenche un programme d'interruption, celui-ci peut être effectué immédiatement sans attendre la fin du chargement du groupe d'information LM1 dans la mémoire tampon de l'interface 111.

Puis, l'ensemble du groupe d'informations LM2 est chargé dans la mémoire tampon de l'interface 112 (étape S41), aux fins d'un stockage ultérieur dans une ligne de cache de la mémoire cache.

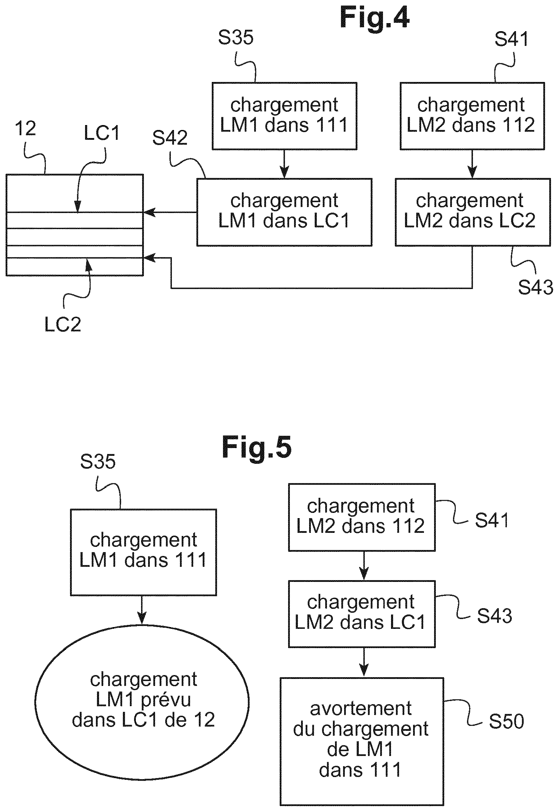

Ceci est illustré plus en détail sur la figure 4.

Plus précisément, une fois le chargement du groupe d'informations LM1 effectué dans la mémoire tampon de la première interface 111 (étape S35), l'interface émet une indication à destination du circuit de contrôle de cache 114.

Celui-ci va alors dans l'étape S42, charger ce groupe d'informations LM1 dans une ligne de cache LC1 de la mémoire cache 12.

Le même processus est effectué en ce qui concerne le groupe d'informations LM2.

Lorsque celui-ci est chargé (étape S41) dans la mémoire tampon de l'interface 112, cette interface émet une indication à destination du circuit de contrôle de cache qui charge alors le groupe d'instructions LM2 dans une ligne de cache LC2 de la mémoire cache 12 (étape S43).

Lorsque les lignes de cache LC1 et LC2 sont différentes, il n'y a pas de problème.

Par contre, dans certains cas, la ligne de cache LC1 peut être identique à la ligne de cache LC2.

En d'autres termes, le groupe d'instructions LM1 et le groupe d'instructions LM2 sont destinés à être stockés dans une même ligne de cache, par exemple la ligne de cache LC1.

Ceci est illustré sur la figure 5.

Aussi, à la suite de la première requête de l'instruction INF1, le chargement du groupe d'instructions LM1 est effectué dans la mémoire tampon de la première interface 111 (étape S35) comme indiqué ci-avant.

Et ce groupe d'instructions LM1 est destiné ensuite à être chargé dans la ligne de cache LC1 de la mémoire cache 12.

Parallèlement, il y a un chargement en cours du groupe d'instructions LM2 contenant la deuxième instruction INF2 requise par le processeur, dans la mémoire tampon de la deuxième interface 112 (étape S41).

Et, si le chargement S41 est terminé alors que le chargement S35 est alors en cours, le circuit de contrôle de cache 114 va alors charger le groupe d'instructions LM2 dans la ligne de cache LC1 (étape S43).

Et, de façon à ce que ce groupe d'instructions LM2 ne soit pas écrasé par le groupe d'instructions LM1 le contrôleur de cache envoie une instruction d'avortement du chargement en cours du groupe d'instructions LM1 dans la mémoire tampon de l'interface 111 (étape S50).

L'invention permet donc de gérer en parallèle des accès à des mémoires différentes contenant par exemple des instructions à exécuter par le processeur, et de ne pas pénaliser l'exécution d'un programme d'interruption stocké dans une mémoire, interne par exemple, alors qu'une série d'instructions issues d'une autre mémoire, externe par exemple, est en cours de chargement dans une mémoire tampon en vue de son chargement dans une ligne de cache de la mémoire cache.

Ceci s'applique que le programme d'interruption soit « cachable » ou non.

Par ailleurs, dans le cas où deux séries d'instructions respectivement stockées par exemple dans deux lignes de mémoires des deux mémoires sont « cachables » et destinées à être stockées dans une même ligne de cache, l'invention offre une politique avantageuse de remplacement dans la mémoire cache. En effet, dans le cas où une deuxième série d'instructions résultant d'une deuxième requête postérieure à une première requête, est prête à être chargée dans ladite ligne de cache avant la première série d'instructions résultant de la requête antérieure, il est prévu un avortement du processus conduisant au chargement de la première série d'instructions dans ladite ligne de cache.

## Revendications

1. Procédé de gestion de la fourniture d'informations à un processeur, le processeur (10) coopérant avec un ensemble de mémoires comportant au moins une mémoire cache (12), une première mémoire (17) stockant au moins une première information (INF1) au sein d'un premier groupe d'informations (LM1) et une deuxième mémoire (16) stockant au moins une deuxième information (LM2) au sein d'un deuxième groupe d'informations (LM2), ladite deuxième information (INF2) comportant au moins une instruction d'un programme d'interruption, le procédé comprenant,
- après un premier défaut de cache consécutif à une première requête (S30) de ladite première information (INF1) émanant du processeur, une première fourniture (S34) au processeur de la première information issue de la première mémoire, puis
- après une deuxième requête (S36) de ladite deuxième information (INF2) émanant du processeur et un deuxième défaut de cache consécutif à ladite deuxième requête (S36), une deuxième fourniture (S40) au processeur de la deuxième information issue de la deuxième mémoire, même si le premier groupe d'informations (LM1) est en cours de transfert depuis la première mémoire en vue de son chargement (S35) dans la mémoire cache (12),
- si le deuxième groupe d'informations (LM2) est prêt à être chargé dans une ligne de cache (LC1) de la mémoire cache (12) avant que le premier groupe d'informations (LM1) soit prêt à être chargé dans cette même ligne de cache (LC1), une interdiction (S50) du chargement du premier groupe d'informations dans ladite ligne de cache (LC1).

2. Procédé selon la revendication 1, dans lequel un contrôleur de cache (11) est couplé entre le processeur (10) et l'ensemble de mémoires, et la première fourniture de la première information et la deuxième fourniture de la deuxième information sont respectivement effectuées sur deux bus distincts (BS1, BS2) reliant respectivement la première mémoire (17) et la deuxième mémoire (16) au contrôleur de cache (11) et sur un troisième bus (BS3) reliant le contrôleur de cache (11) et le processeur (10).

3. Procédé selon l'une des revendications précédentes, dans lequel ladite première information (INF1) comporte au moins une instruction à exécuter par le processeur.

4. Système, comprenant un processeur (10), un ensemble de mémoire configuré pour coopérer avec le processeur (10) et comportant au moins une mémoire cache (12), une première mémoire (17) configurée pour stocker au moins une première information (INF1) au sein d'un premier groupe d'informations (LM1) et une deuxième mémoire (16) configurée pour stocker au moins une deuxième information (INF2) au sein d'un deuxième groupe d'informations (LM2), ladite deuxième information (INF2) comportant au moins une instruction d'un programme d'interruption, et des moyens de contrôle (11, BS1, BS2, BS3) configurés pour :
- après une première requête de ladite première information (INF1) émanant du processeur, effectuer une première fourniture au processeur de la première information issue de la première mémoire, puis
- après une deuxième requête de ladite deuxième information (INF2) émanant du processeur relatif à la deuxième information et après un deuxième défaut de cache consécutif à ladite deuxième requête, effectuer une deuxième fourniture au processeur de la deuxième information issue de la deuxième mémoire même si le premier groupe d'informations (LM1) est en cours de transfert depuis la première mémoire en vue de son chargement dans la mémoire cache,
- si le deuxième groupe d'informations est prêt à être chargé dans une ligne de cache de la mémoire cache avant que le premier groupe d'informations soit prêt à être chargé dans cette même ligne de cache, interdire (S50) le chargement du premier groupe d'informations dans ladite ligne de cache.

5. Système selon la revendication 4, dans lequel les moyens de contrôle comprennent
- un contrôleur de cache (11) couplé entre le processeur et l'ensemble de mémoires, et possédant au moins une première interface (111), une deuxième interface (112) et une troisième interface (113),
- un premier bus (BS1) couplé entre la première interface (111) et la première mémoire (17),
- un deuxième bus (BS2) couplé entre la deuxième interface (112) et la deuxième mémoire (16),
- un troisième bus (BS3) couplé entre la troisième interface (113) et le processeur (10),
le contrôleur de cache (11) étant configuré pour fournir la première information délivrée par la première mémoire sur le premier bus au processeur via la troisième interface et le troisième bus, et pour fournir la deuxième information délivrée par la deuxième mémoire sur le deuxième bus au processeur via la troisième interface et le troisième bus.

6. Système selon la revendication 5, dans lequel la première interface (111) comporte une mémoire tampon configurée pour stocker le premier groupe d'informations (LM1) extrait de la première mémoire et le contrôleur de cache (11) est configuré pour faire avorter le processus de stockage du premier groupe d'informations (LM1).

7. Système selon l'une des revendications 4 à 6, dans lequel ladite première information comporte au moins une instruction (INF1) à exécuter par le processeur.

8. Système selon l'une des revendications 4 à 7, comprenant un microcontrôleur (1) incorporant le processeur (10), la mémoire cache (12), la deuxième mémoire (16) et le contrôleur de cache (11), et dans lequel la première mémoire (17) est une mémoire externe au microcontrôleur (1).

## Patentansprüche

1. Verfahren zum Verwalten des Bereitstellens von Daten an einen Prozessor, wobei der Prozessor (10) mit einem Speicherarray zusammenarbeitet, das mindestens einen Cache-Speicher (12), einen ersten Speicher (17), der mindestens erste Daten (INF1) in einer ersten Datengruppe (LM1) speichert, und einen zweiten Speicher (16) umfasst, der mindestens zweite Daten (LM2) in einer zweiten Datengruppe (LM2) speichert, wobei die zweiten Daten (INF2) mindestens eine Anweisung aus einem Unterbrechungsprogramm umfassen, wobei das Verfahren Folgendes beinhaltet:
- nach einem ersten Cache-Fehler im Anschluss an eine erste Anfrage (S30) nach den ersten Daten (INF1) seitens des Prozessors, ein erstes Bereitstellen (S34) der ersten Daten aus dem ersten Speicher an den Prozessor, dann
- nach einer zweiten Anfrage (S36) nach den zweiten Daten (INF2) seitens des Prozessors und einem zweiten Cache-Fehler im Anschluss an die zweite Anfrage (S36), ein zweites Bereitstellen (S40) der zweiten Daten aus dem zweiten Speicher an den Prozessor, selbst wenn die erste Datengruppe (LM1) gerade aus dem ersten Speicher übertragen wird, um sie in den Cache-Speicher (12) zu laden (S35),
- wenn die zweite Datengruppe (LM2) zum Laden in eine Cache-Zeile (LC1) des Cache-Speichers (12) bereit ist, bevor die erste Datengruppe (LM1) zum Laden in dieselbe Cache-Zeile (LC1) bereit ist, Verhindern (S50) des Ladens der ersten Datengruppe in die Cache-Zeile (LC1).

2. Verfahren nach Anspruch 1, wobei ein Cache-Controller (11) zwischen den Prozessor (10) und das Speicherarray gekoppelt ist, und das erste Bereitstellen der ersten Daten und das zweite Bereitstellen der zweiten Daten jeweils auf zwei separaten Bussen (BS1, BS2) ausgeführt wird, die den ersten Speicher (17) bzw. den zweiten Speicher (16) mit dem Cache-Controller (11) verbinden, und auf einem dritten Bus (BS3), der den Cache-Controller (11) und den Prozessor (10) verbindet.

3. Verfahren nach einem der vorhergehenden Ansprüche, wobei die ersten Daten (INF1) mindestens eine vom Prozessor auszuführende Anweisung umfassen.

4. System, das einen Prozessor (10), ein Speicherarray, das dazu konfiguriert ist, mit dem Prozessor (10) zusammenzuarbeiten, und einen Cache-Speicher (12), einen ersten Speicher (17), der dazu konfiguriert ist, mindestens erste Daten (INF1) in einer ersten Datengruppe (LM1) zu speichern, und einen zweiten Speicher (16) umfasst, der dazu konfiguriert ist, mindestens zweite Daten (INF2) in einer zweiten Datengruppe (LM2) zu speichern, wobei die zweiten Daten (INF2) mindestens eine Anweisung aus einem Unterbrechungsprogramm umfassen, und Steuermittel (11, BS1, BS2, BS3) beinhaltet, die für Folgendes konfiguriert sind:
- nach einer ersten Anfrage nach den ersten Daten (INF1) seitens des Prozessors, Ausführen eines ersten Bereitstellens der aus dem ersten Speicher erhaltenen ersten Daten an den Prozessor; und
- nach einer zweiten Anfrage nach den zweiten Daten (INF2) seitens des Prozessors bezüglich der zweiten Daten und nach einem zweiten Cache-Fehler im Anschluss an die zweite Anfrage, Ausführen eines zweiten Bereitstellens der aus dem zweiten Speicher erhaltenen zweiten Daten an den Prozessor, selbst wenn die erste Datengruppe (LM1) gerade zum Laden aus dem ersten Speicher übertragen wird, um sie in den Cache-Speicher zu laden,
- wenn die zweite Datengruppe zum Laden in eine Cache-Zeile des Cache-Speichers bereit ist, bevor die erste Datengruppe zum Laden in dieselbe Cache-Zeile bereit ist, Verhindern (S50) des Ladens der ersten Datengruppe in die Cache-Zeile.

5. System nach Anspruch 4, wobei die Steuermittel Folgendes umfassen:
- einen Cache-Controller (11), der zwischen den Prozessor und das Speicherarray gekoppelt ist und eine erste Schnittstelle (111), eine zweite Schnittstelle (112) und eine dritte Schnittstelle (113) besitzt,
- einen ersten Bus (BS1), der zwischen die erste Schnittstelle (111) und den ersten Speicher (17) gekoppelt ist,
- einen zweiten Bus (BS2), der zwischen die zweite Schnittstelle (112) und den zweiten Speicher (16) gekoppelt ist,
- einen dritten Bus (BS3), der zwischen die dritte Schnittstelle (113) und den Prozessor (10) gekoppelt ist, wobei der Cache-Controller (11) dazu konfiguriert ist, die ersten Daten, die vom ersten Speicher auf den ersten Bus geliefert werden, über die dritte Schnittstelle und den dritten Bus an den Prozessor bereitzustellen und die zweiten Daten, die vom zweiten Speicher auf den zweiten Bus geliefert werden, über die dritte Schnittstelle und den dritten Bus an den Prozessor bereitzustellen.

6. System nach Anspruch 5, wobei die erste Schnittstelle (111) einen Pufferspeicher umfasst, der dazu konfiguriert ist, die aus dem ersten Speicher stammende erste Datengruppe (LM1) zu speichern, und der Cache-Controller (11) dazu konfiguriert ist, zu bewirken, dass der Prozess des Speicherns der ersten Datengruppe (LM1) abgebrochen wird.

7. System nach einem der Ansprüche 4 bis 6, wobei die ersten Daten mindestens eine vom Prozessor auszuführende Anweisung (INF1) umfassen.

8. System nach einem der Ansprüche 4 bis 7, das ferner einen Mikrocontroller (1) beinhaltet, der den Prozessor (10), den Cache-Speicher (12), den zweiten Speicher (16) und den Cache-Controller (11) enthält, und wobei der erste Speicher (17) ein Speicher ist, der außerhalb des Mikrocontrollers (1) liegt.

## Claims

1. Method for managing the supply of information to a processor, the processor (10) cooperating with a set of memories including at least one cache memory (12), a first memory (17) storing at least one first item of information (INF1) within a first group of information (LM1) and a second memory (16) storing at least one second item of information (LM2) within a second group of information (LM2), said second item of information (INF2) including at least one instruction of an interrupt program, the method comprising,
- after a first cache miss following a first request (S30) for said first item of information (INF1) coming from the processor, a first supply (S34) to the processor of the first item of information coming from the first memory, then
- after a second request (S36) for said second item of information (INF2) coming from the processor and a second cache miss following said second request (S36), a second supply (S40) to the processor of the second item of information coming from the second memory, even if the first group of information (LM1) is in the process of transfer from the first memory with a view to loading thereof (S35) into the cache memory (12),
- if the second group of information (LM2) is ready to be loaded in a cache line (LC1) of the cache memory (12) before the first group of information (LM1) is ready to be loaded into this same cache line (LC1), a prohibition (S50) on loading the first group of information into said cache line (LC1).

2. Method according to claim 1, wherein a cache controller (11) is coupled between the processor (10) and the set of memories, and the first supply of the first item of information and the second supply of the second item of information are respectively implemented on two distinct buses (BS1, BS2) respectively connecting the first memory (17) and the second memory (16) to the cache controller (11) and on a third bus (BS3) connecting the cache controller (11) and the processor (10).

3. Method according to one of the preceding claims, wherein said first item of information (INF1) includes at least one instruction to be executed by the processor.

4. System, comprising a processor (10), a set of memories configured to cooperate with the processor (10) and including at least one cache memory (12), a first memory (17) configured to store at least one first item of information (INF1) within a first group of information (LM1) and a second memory (16) configured to store at least one second item of information (INF2) within a second group of information (LM2), said second item of information (INF2) including at least one instruction of an interrupt program, and control means (11, BS1, BS2, BS3) configured to:
- after a first request for said first item of information (INF1) coming from the processor, implement a first supply to the processor of the first item of information coming from the first memory, then
- after a second request for said second item of information (INF2) coming from the processor relating to the second item of information and after a second cache miss following said second request, implementing a second supply to the processor of the second item of information coming from the second memory even if the first group of information (LM1) is in the process of transfer from the first memory with a view to loading thereof into the cache memory,
- if the second group of information is ready to be loaded into a cache line of the cache memory for the first group of information is ready to be loaded into this same cache line, prohibiting (S50) loading of the first group of information into said cache line.

5. System according to claim 4, wherein the control means comprise
- a cache controller (11) coupled between the processor and the set of memories, and having at least a first interface (111), a second interface (112) and a third interface (113),
- a first bus (BS1) coupled between the first interface (111) and the first memory (17),
- a second bus (BS2) coupled between the second interface (112) and the second memory (16),
- a third bus (BS3) coupled between the third interface (113) and the processor (10),
the cache controller (11) being configured to supply the first item of information delivered by the first memory on the first bus to the processor via the third interface and the third bus, and to supply the second item of information delivered by the second memory on the second bus to the processor via the third interface and the third bus.

6. System according to claim 5, wherein the first interface (111) includes a buffer configured to store the first group of information (LM1) extracted from the first memory and the cache controller (11) is configured to abort the process of storing the first group of information (LM1).

7. System according to one of claims 4 to 6, wherein said first item of information includes at least one instruction (INF1) to be executed by the processor.

8. System according to one of claims 4 to 7, comprising a microcontroller (1) incorporating the processor (10), the cache memory (12), the second memory (16) and the cache controller (11), and wherein the first memory (17) is a memory external to the microcontroller (1).
